# EUROPEAN PATENT APPLICATION

(11) **EP 4 306 784 A1**
(43) Date of publication of application: **17.01.2024**
(21) Application number: 23184678.3
(22) Date of filing: 11.07.2023
(51) Int. Cl.: F02C 6/08

(54) **AIR CYCLE MACHINE WITH INTEGRAL HEAT EXCHANGER**

(30) Priority: 12.07.2022 US 202217863138; 12.07.2022 US 202217863072
(71) Applicant: Hamilton Sundstrand Corporation, Charlotte, NC 28217-4578 (US)
(72) Inventor: RYON, Jason A., Carlisle, 50047 (US); MANGOYAN, Raffi, Manchester, 06042 (US); GAYE, Ousmane, Hartford, CT, 06105 (US); SIMPSON, Christopher, West Hartford, 06110 (US); COLSON, Darryl, West Suffield, 06093 (US); KOWALSKI, John W., Hadley, 01035 (US); KILCHYK, Viktor, Lancaster, NY 14086 (US); SALTZMAN, David, Glastonbury, 06033 (US); ARMY, Donald E., Enfield, 06082 (US); COLSON, Paul M., Westfield, 01085 (US); LIAO, Xiaohong, Andover, 06232 (US)
(74) Representative: Dehns

(57) **Abstract**

An air cycle machine includes an outer housing (130), a first section (52) arranged within the outer housing (130), and a second section (54) arranged within the outer housing (130) and operably coupled to the first section (52). The first section (52) includes a first housing and a first rotatable component and the second section (54) includes a second housing and a second rotatable component. At least a portion of a fluid flow path extending between an outlet of the first rotatable component and an inlet of the second rotatable component is arranged within the outer housing (130).

## Description

### BACKGROUND

Exemplary embodiments of the present disclosure relate to the art of environmental control systems, and more particularly to an environmental control system in which an air cycle machine is in a heat exchange relationship with one or more liquid cycle subsystems.

Environmental control systems provide a supply of conditioned air to an enclosure of an aircraft, such as an aircraft cabin and cockpit. Conventional environmental control systems have utilized an air-to-air cycle cooling system which is in a heat exchange relationship with a liquid loop. The liquid loop is typically used to cool other loads within the aircraft, such as avionics packages or the like. Interaction between the air and liquid subsystems may be relatively complex.

In a conventional system, a flow of bleed air is taken from a bleed source, for example, an intermediate or high pressure stage of a gas turbine engine compressor. The bleed air is provided to a heat exchanger where the temperature is reduced before entering a compressor of an air-cycle machine (ACM). After compression, the air flows to another heat exchanger to reduce the temperature thereof. The cooled air is then routed to a turbine of the ACM where the air expands causing a reduction in the pressure and temperature of the air. The air output from the turbine will then pass through a condenser heat exchanger to remove moisture from the air. The extracted moisture is typically collected in a water collector and the dry air is routed to a mixer before being sent to a cabin. Such existing systems includes several components fluidly connected to one another by ducts or conduits.

### BRIEF DESCRIPTION

According to an embodiment, an air cycle machine includes an outer housing, a first section arranged within the outer housing, and a second section arranged within the outer housing and operably coupled to the first section. The first section includes a first housing and a first rotatable component and the second section includes a second housing and a second rotatable component. At least a portion of a fluid flow path extending between an outlet of the first rotatable component and an inlet of the second rotatable component is arranged within the outer housing.

In addition to one or more of the features described above, or as an alternative, in further embodiments an entirety of the fluid flow path extending between the outlet of the first rotatable component and the inlet of the second rotatable component is arranged within the outer housing.

In addition to one or more of the features described above, or as an alternative, in further embodiments the first section is a compressor section and the second section is a turbine section.

In addition to one or more of the features described above, or as an alternative, in further embodiments the first section is a first turbine section and the second section is a second turbine section.

In addition to one or more of the features described above, or as an alternative, in further embodiments the outer housing further comprises at least one wall extending inwardly, the at least one wall cooperating with at least one of the first section and the second section to define the portion of the fluid flow path extending between the outlet of the first rotatable component and the inlet of the second rotatable component.

In addition to one or more of the features described above, or as an alternative, in further embodiments comprising at least one heat exchanger arranged along the at least the portion of the fluid flow path extending between the outlet of the first rotatable component and the inlet of the second rotatable component.

In addition to one or more of the features described above, or as an alternative, in further embodiments the at least one heat exchanger is positioned within one of the first housing and the second housing.

In addition to one or more of the features described above, or as an alternative, in further embodiments the at least one heat exchanger is mounted downstream from one of the first rotatable component and the second rotatable component relative to a flow through the first section or the second section.

In addition to one or more of the features described above, or as an alternative, in further embodiments the at least one heat exchanger is an air-liquid heat exchanger.

In addition to one or more of the features described above, or as an alternative, in further embodiments the outer housing and at least the portion of the first section and the second section are integrally formed.

In addition to one or more of the features described above, or as an alternative, in further embodiments comprising a third section arranged within the outer housing and operably coupled to the first section and the second section, the third section including a third housing and a third rotatable component.

In addition to one or more of the features described above, or as an alternative, in further embodiments the first section is a compressor section, the second section is a first turbine section, and the third section is second turbine section.

In addition to one or more of the features described above, or as an alternative, in further embodiments the compressor section, the first turbine section, and the second turbine section are operably coupled by a shaft, the compressor section, the first turbine section, and the second turbine section being arranged in series along an axis of the shaft.

In addition to one or more of the features described above, or as an alternative, in further embodiments a diameter of the outer housing is uniform over a length of the air cycle machine.

### BRIEF DESCRIPTION OF THE DRAWINGS

The following descriptions should not be considered limiting in any way. With reference to the accompanying drawings, like elements are numbered alike:
FIG. 1 is a schematic diagram of a portion of an environmental control system;
FIG. 2 is a schematic diagram of an air cycle machine for use in an environmental control system according to an embodiment;
FIG. 3 is a perspective cross-sectional view of an air cycle machine of an environmental control system according to an embodiment;
FIG. 4 is a plan view of the heat exchanger within the compressor section of the air cycle machine of FIG. 3 according to an embodiment;
FIG. 5 is a perspective view of the heat exchanger within the turbine section of the air cycle machine of FIG. 3 according to an embodiment;
FIG. 6 is a cross-sectional view of an air cycle machine for use in an environmental control system according to another embodiment;
FIG. 7 is a perspective view of the air cycle machine of FIG. 6 according to an embodiment; and
FIG. 8 is a cross-sectional view of an air cycle machine for use in an environmental control system according to another embodiment.

### DETAILED DESCRIPTION

A detailed description of one or more embodiments of the disclosed apparatus and method are presented herein by way of exemplification and not limitation with reference to the Figures.

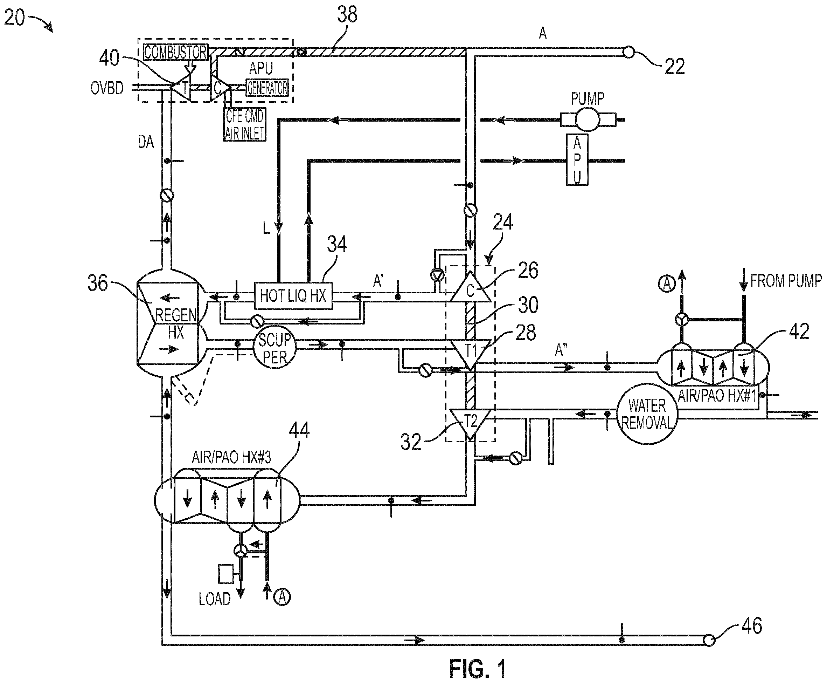

With reference now to FIG. 1, a schematic diagram of a portion of an environmental control system (ECS), such as an air conditioning unit or pack for example, is depicted according to non-limiting embodiments as illustrated. Although the environmental control system 20 is described with reference to an aircraft, alternative applications, such as another vehicle for example, are also within the scope of the disclosure. As shown in the figures, the ECS 20 can receive a medium A at an inlet 22. In an embodiment where the environmental control system 20 is used in an aircraft application, the medium A may be bleed air, which is pressurized air originating from, i.e., being "bled" from, an engine or auxiliary power unit of the aircraft. It shall be understood that one or more of the temperature, humidity, and pressure of the bleed air can vary based upon the compressor stage and revolutions per minute of the engine or auxiliary power unit from which the air is drawn.

In another embodiment, the medium A is fresh air, such as outside air for example. The outside air can be procured via one or more scooping mechanisms, such as an impact scoop or a flush scoop for example. In an embodiment, the medium A is ram air drawn from a portion of a ram air circuit. Generally, the fresh or outside air as described herein is at an ambient pressure equal to an air pressure outside of the aircraft when the aircraft is on the ground and is between an ambient pressure and a cabin pressure when the aircraft is in flight.

The ECS 20 additionally includes at least one compression device 24. The compression device 24 is a mechanical device that includes components for performing thermodynamic work on a medium (e.g., extracts work from or applies work to the medium A by raising and/or lowering pressure and by raising and/or lowering temperature). Examples of a compression device 24 include an air cycle machine, a two-wheel air cycle machine, a three-wheel air cycle machine, a four-wheel air cycle machine, etc. As shown, the compression device 24, also referred to herein as an air cycle machine, may include a compressor 26 and at least one turbine 28 operably coupled by a shaft 30. In an embodiment, the compression device 24 includes two turbines 28, 32. In such embodiments, the medium A may be configured to flow through the turbines 28, 32 in series, or alternatively, in parallel.

A compressor 26 is a mechanical device configured to raise a pressure of a medium and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc. A turbine, such as any of turbines 28 and 32 for example, is a mechanical device that expand a medium and extract work therefrom (also referred to as extracting energy) to drive the compressor 26 via the shaft 30.

As shown, the medium A provided at the inlet 22 is delivered to the compression device 24. In the illustrated, non-limiting embodiment, the medium A is provided to an inlet of the compressor 26. The act of compressing the medium A, heats and increases the pressure of the medium A. From the outlet of the compressor 26, the compressed medium A' is cooled at a hot liquid heat exchanger 34, which is an air-liquid heat exchanger. In an embodiment, the liquid L used to cool the compressed medium A' within the hot liquid heat exchanger 34 is provided from a liquid cooling loop used to cool one or more loads of the vehicle.

From the hot liquid heat exchanger 34, the cooled compressed medium A' is directed to a regeneration heat exchanger 36. The regeneration heat exchanger 36 may be an air-air heat exchanger configured to utilize excess cooling capacity of the ECS 20 to further cool the compressed medium A'. For example, in an embodiment, a portion of the medium A provided at the inlet 22 is diverted along a regeneration pathway 38 to a turbine 40 prior to being delivered to the regeneration heat exchanger 36. Within the turbine 40, work is extracted from the diverted medium DA, thereby cooling the diverted medium DA. At the regeneration heat exchanger 36, the compressed medium A' is cooled via thermal exchange with the diverted medium DA. The heated diverted medium DA may then be exhausted overboard.

The further cooled compressed medium A' output from the regeneration heat exchanger 36 is directed to an inlet of the turbine 28. Within the turbine 28, energy is extracted from the compressed medium A' to form an expanded medium A". The work extracted from the compressed medium A' in the turbine 28 drives the compressor 26. The expanded medium A" is output from the turbine 28 to a second heat exchanger 42. The second heat exchanger 42 may be configured as a liquid-air heat exchanger with the liquid being the same liquid L used in the hot liquid heat exchanger 34. Accordingly, the second heat exchanger 42 may be arranged downstream from the hot liquid heat exchanger 34 relative to both the flow of the medium A and the flow of the liquid L. Within the second heat exchanger 42, thermal energy is transferred between the expanded medium A" and the liquid L. In an embodiment, the expanded medium A" is heated by the liquid L, and the resulting cooler liquid L is then directed to one or more liquid cooled heat loads (not shown).

From the second heat exchanger 42, the expanded medium A" may be provided to an inlet of the second turbine 32. The energy extracted from the expanded medium A" within the second turbine 32 is used to drive the compressor 26. The resulting expanded medium A" output from the second turbine 32 is cooler and has a lower pressure than the expanded medium A" provided at the inlet thereof. From the second turbine 32, the expanded medium A" is provided to a third heat exchanger 44. The third heat exchanger 44 may be configured as a liquid-air heat exchanger with the liquid being the same liquid L used in at least one of the hot liquid heat exchanger and the second heat exchanger 42. Accordingly, the third heat exchanger 44 may be arranged downstream from at least one of the hot liquid heat exchanger 34 and the second heat exchanger 42 relative to both the flow of the medium A and the flow of the liquid L. Within the third heat exchanger 44, thermal energy is transferred between the expanded medium A" and the liquid L. In an embodiment, the expanded medium A" is heated by the liquid L, and the resulting cooler liquid is then directed to one or more liquid cooled heat loads. Further, the heated expanded medium A" may be delivered to one or more loads, illustrated schematically at 46, such as to the cabin of the aircraft for example. It should be understood that the environmental control system 20 illustrated and described herein is intended as an example only, and that an ECS having another suitable flow configuration for conditioning one or more mediums is within the scope of the disclosure.

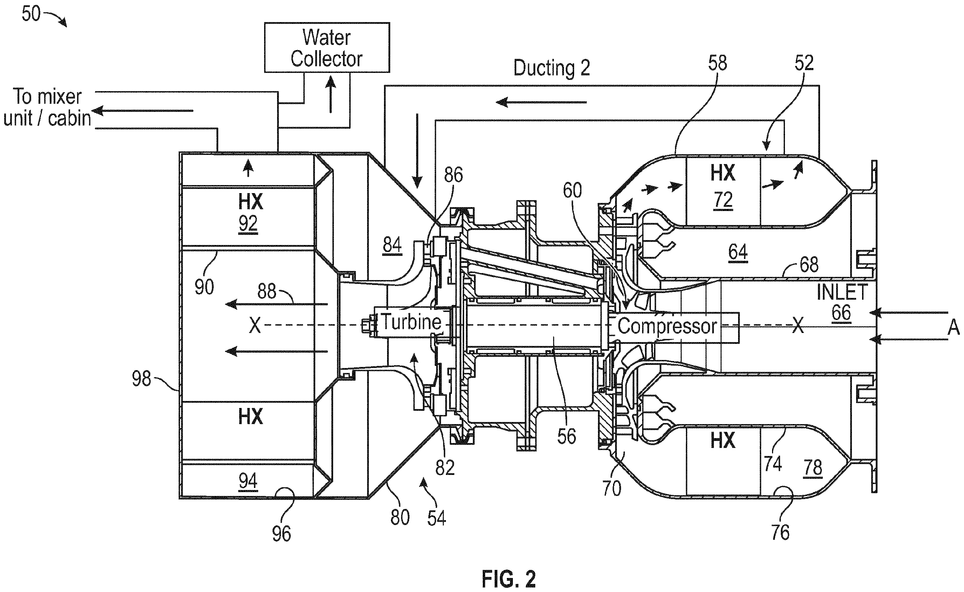

With reference now to FIGS. 2-5, an exemplary air cycle machine 50 suitable for use as a compression device or a refrigeration unit in an environmental control system, such as ECS 20 for example, is illustrated in more detail. As shown, the air cycle machine 50 includes a first section 52 and a second section 54 which are connected to a shaft 56 rotatable about a central axis X. The first section may be a compressor section 52 including a first housing (compressor housing) 58 and a first rotatable component, such as a compressor rotor 60 having a plurality of compressor blades 62, arranged within the hollow interior of the compressor housing 58. In the illustrated, non-limiting embodiment, a compressor inlet 66 includes an axially extending duct 68 arranged within the hollow interior of the compressor housing 58 and defining an aperture through which a medium or working fluid to be compressed is received. The compressor rotor 60 is rotatable about the axis X by the shaft 56 and directs the medium from the compressor inlet 66 radially outwardly towards a compressor outlet 70. In an embodiment, the compressor outlet 70 is also arranged within the hollow interior of the compressor housing 58, but is separated from the compressor inlet 66 by the inlet duct 68.

A heat exchanger 72 or first heat exchanger may be arranged within the interior of the compressor housing 58. For example, in the illustrated, non-limiting embodiment, an intermediate wall 74 is arranged within the hollow interior at a position radially offset from the duct 68 defining the compressor inlet 66, between the duct 68 and the wall 76 forming the exterior of the compressor housing 58. An annular clearance 78 is defined between the intermediate wall 74 and the exterior wall 76 of the compressor housing 58. It should be appreciated that embodiments that do not include an intermediate wall are also contemplated herein. In such embodiments, the annular clearance 78 is defined between the exterior surface of the duct 68 and the wall 76. The heat exchanger 72 may be arranged within this annular clearance 78, directly downstream from and in fluid communication with the compressor outlet 70. The heat exchanger 72 may extend over a portion or over a substantial entirety of the width of the compressor housing 58, measured parallel to the axis X of the shaft 56. Similarly, the heat exchanger 72 may span the entire radial height of the clearance 78, or may extend over only a portion thereof. Further, in some embodiments, the heat exchanger 72 may have an annular configuration or an at least partially annular configuration.

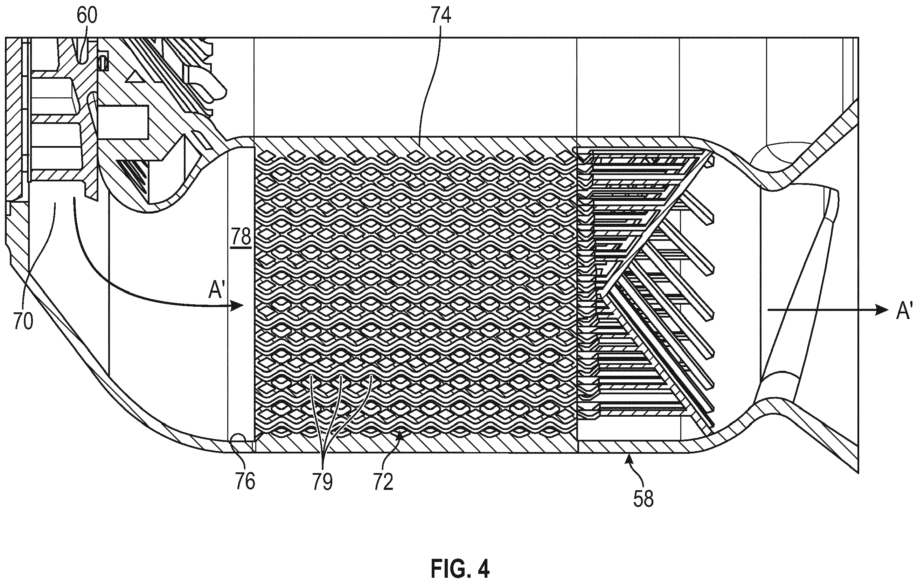

The heat exchanger 72 is configured as an air-liquid heat exchanger, such as the hot liquid heat exchanger of the ECS 20 of FIG. 1 for example. In the illustrated, non-limiting embodiment, the heat exchanger 72 includes a plurality of first passages 79 (see FIG. 4) though which a liquid, such as the liquid of a liquid cooling loop for example, is configured to flow. The flow of the compressed medium A' output from the compressor outlet 70 may be configured to flow about an exterior of the plurality of first passages 79. Alternatively, the heat exchanger 72 may include a plurality of second passages through which the compressed medium A' is configured to flow. However, it should be appreciated that a heat exchanger having any suitable configuration is contemplated herein. Within the heat exchanger 72, heat from the compressed medium A' is transferred to the liquid L.

The second section 54 of the air cycle machine 50 may be a turbine section including a second housing (turbine housing) 80 and a second rotatable component, such as a turbine rotor 82 arranged within the hollow interior 84 of the turbine housing 80. The turbine rotor 82 is mounted to the shaft 56 for rotation about the shaft axis X. A turbine inlet 86 includes a duct defining an aperture through which a medium, such as compressed medium A', passes prior to expansion within the turbine section 54. From the turbine inlet 86, the medium A' is provided to the turbine rotor 82. The turbine rotor 82 is rotated about the axis X as the medium A' flows through the turbine section 54, thereby extracting energy from the medium A'. From the turbine rotor 82, the expanded medium A" flows to the turbine outlet 88, which is also a duct 90 defining an aperture through which expanded medium A" is configured to exit or depart the turbine section 54. In the illustrated, non-limiting embodiment, the turbine inlet 86 has a radial in-flow configuration and the turbine outlet has an axial outflow configuration. However, embodiments where the turbine section 54 has another flow configuration are also contemplated herein. Although the first section 52 and the second section 54 are illustrated and described herein as a compressor section and a turbine section, respectively, it should be appreciated that embodiments having a different configuration, such as where both the first section 52 and the second section 54 are turbine sections for example, are also within the scope of the disclosure.

A heat exchanger 92 may be arranged within the turbine section 54 of the air cycle machine 50. In an embodiment, the heat exchanger 92 is arranged within the annular clearance 94 formed between an exterior surface of the duct 90 and the interior surface of the wall 96 of the turbine housing 80. Inclusion of the heat exchanger 92 may be in addition to, or as an alternative to the heat exchanger 72 integrated into the compressor section 52 of the air cycle machine 50. In some embodiments, the heat exchanger 92 has an annular configuration or an at least partially annular configuration.

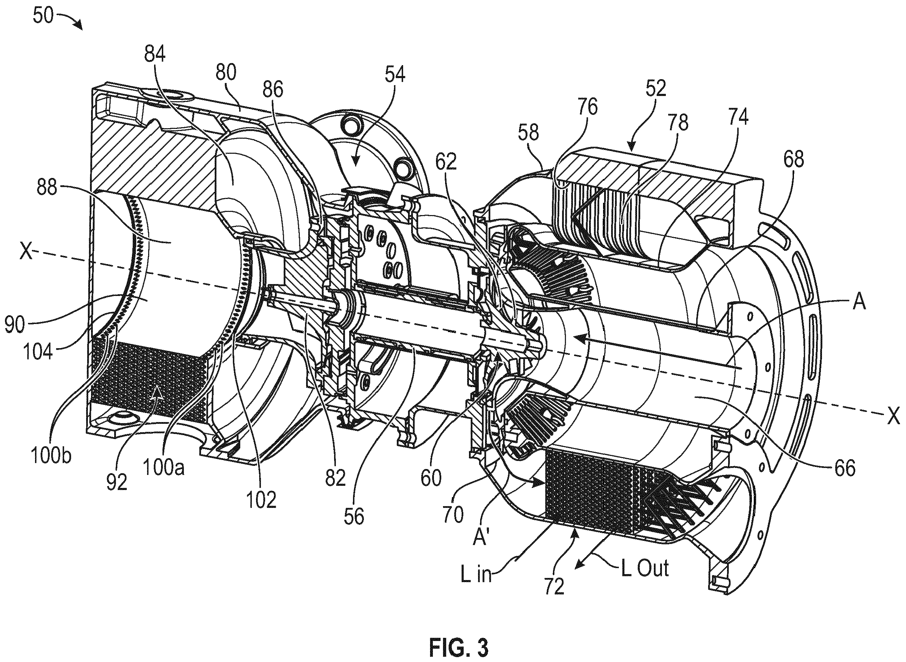

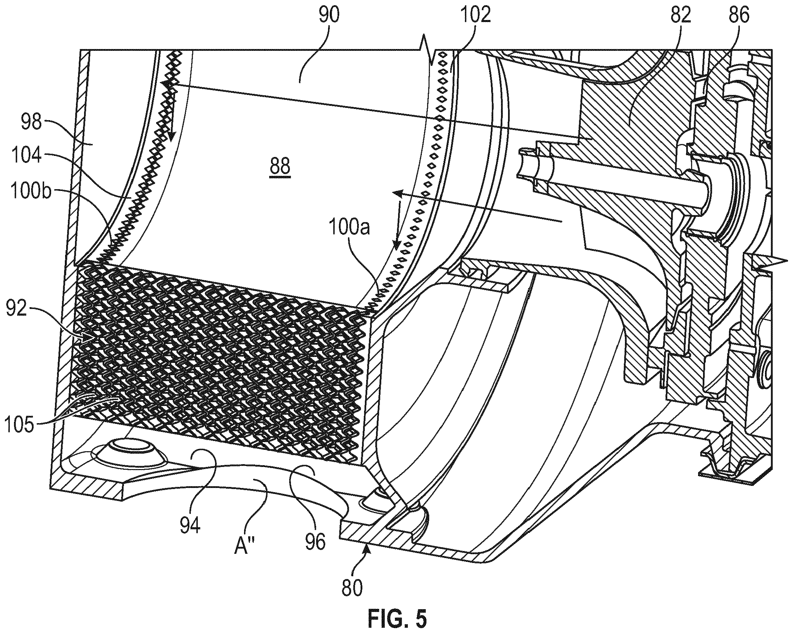

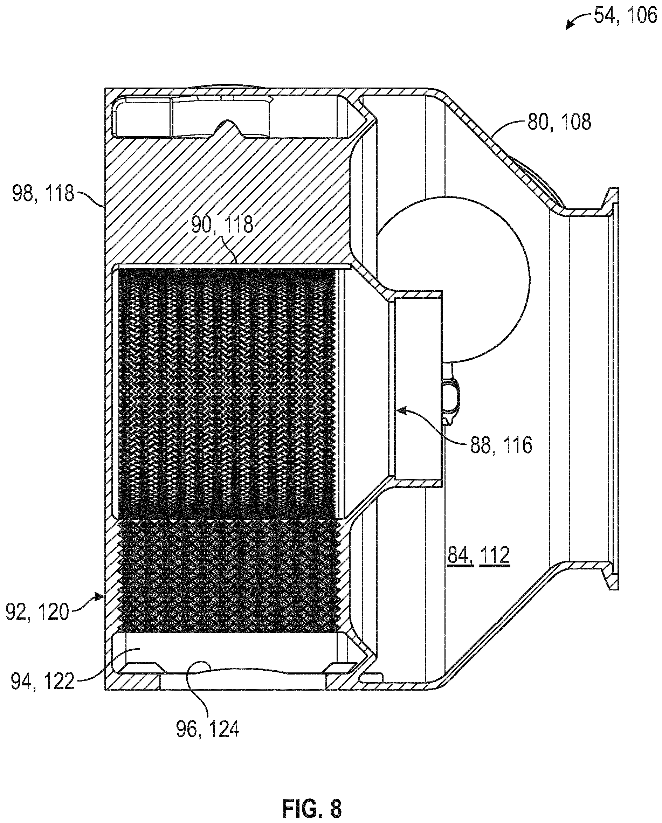

The distal end 98 of the turbine housing 80 may be substantially sealed. As a result, one or more openings 100 may be formed in the duct 90 defining the turbine outlet 88 to define a radial flow path extending directly from the turbine outlet 88 into the heat exchanger 92. With reference to FIGS. 3 and 5, in the illustrated, non-limiting embodiment, a first group of openings 100a is formed adjacent to a first end 102 the duct 90 and a second group of openings 100b is formed adjacent to a second end 104 of the duct 90. However, in other embodiments, as shown in FIG. 8, the openings 100 may extend over the entirety of the duct 90. Embodiments where the duct 90 has any suitable configuration of openings 100 to allow the expanded medium A" provided at the turbine outlet 88 to flow into the heat exchanger 92 is contemplated herein.

The heat exchanger 92 may be configured as an air-liquid heat exchanger, such as the second heat exchanger of the ECS 20 of FIG. 1 for example. In the illustrated, non-limiting embodiment, the heat exchanger 92 includes a plurality of first passages 105 though which a liquid, such as the liquid of a liquid cooling loop for example, is configured to flow. The flow of the expanded medium A" output from the turbine outlet 88 may be configured to flow radially outward, over an exterior of the plurality of first passages 105. Alternatively, the heat exchanger 92 may include a plurality of second passages through which the expanded medium A" is configured to flow. However, it should be appreciated that a heat exchanger having any suitable configuration is contemplated herein. Within the heat exchanger 92, heat from the liquid L is transferred to the expanded medium A".

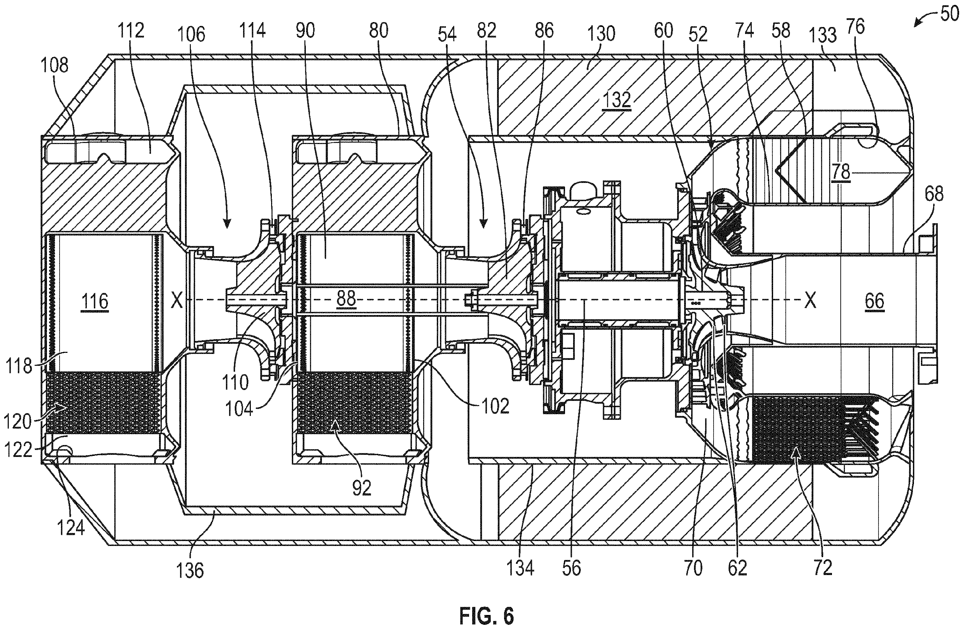

In an embodiment, as shown in FIG. 6, the air cycle machine 50 additionally includes a third section, such as a second or another turbine section. In such embodiments, the second section 54 as previously described herein may be considered the first turbine section and the third section may be considered the second turbine section. In embodiments of an air cycle machine 50 including a compressor section 52, a first turbine section 54, and a second turbine section 106, the second turbine section 106 may be arranged opposite the compressor section 52 relative to the first turbine section 54. The second turbine section 106 may be substantially identical to the first turbine section 54, or may be different. As shown, the third section 106 includes a third housing (second turbine housing) 108 and a third rotatable component, such as a second turbine rotor 110 arranged within the hollow interior 112 of the second turbine housing 108. The second turbine rotor 110 is also mounted or operably coupled to the shaft 56 for rotation about the shaft axis X.

A second turbine inlet 114 includes a duct defining an aperture through which a medium, such as compressed medium A' or expanded medium A", passes prior to expansion within the second turbine section 106. From the second turbine inlet 114, the medium A' or A" is provided to the second turbine rotor 110. The second turbine rotor 110 is rotated about the axis X as the medium A' or A" flows through the second turbine section 106, thereby extracting energy from the medium A' or A". From the second turbine rotor 110, the expanded medium A" flows to the second turbine outlet 116, which is also a duct 118 defining an aperture through which expanded medium is configured to exit or depart the second turbine section 106. In the illustrated, non-limiting embodiment, the second turbine inlet 114 has a radial in-flow configuration and the second turbine outlet 116 has an axial outflow configuration. However, embodiments where the second turbine section 106 has another flow configuration are also contemplated herein.

A heat exchanger 120 may be arranged within the second turbine section 106 of the air cycle machine 50. In an embodiment, the heat exchanger 120 is arranged within the annular clearance 122 formed between an exterior surface of the duct 118 and the interior surface of the wall 124 of the second turbine housing 108. Inclusion of the heat exchanger 120 may be in addition to, or as an alternative to the heat exchanger 72 integrated into the compressor section 52 of the air cycle machine 50 and/or the heat exchanger 92 integrated into the first turbine section 54. The configuration of the heat exchanger 120 may be substantially identical to the heat exchanger 92 (as shown in FIG. 5), or may be different than the heat exchanger 92.

The heat exchanger 120 may be configured as an air-liquid heat exchanger, such as the third heat exchanger 44 of the ECS 20 of FIG. 1 for example. In the illustrated, non-limiting embodiment, the heat exchanger 120 includes a plurality of first passages though which a liquid, such as the liquid of a liquid cooling loop for example, is configured to flow. The flow of the expanded medium A" output from the second turbine outlet 116 may be configured to flow radially outward, over an exterior of the plurality of first passages 105. Alternatively, the heat exchanger 120 may include a plurality of second passages through which the expanded medium A" is configured to flow. However, it should be appreciated that a heat exchanger having any suitable configuration is contemplated herein. Within the heat exchanger 120, heat from the liquid L is transferred to the expanded medium A".

The air cycle machine 50 may additionally define all or at least a portion of a fluid flow path extending between two or more of the various wheels or sections thereof. In the illustrated, non-limiting embodiment, the air cycle machine 50 includes an outer housing 130 surrounding or encapsulating each of the compressor section 52 and the turbine section 54. In embodiments where the air cycle machine 50 additionally includes a second turbine section 106, as shown in the FIG., the outer housing 130 may extend about and/or encapsulate each of the compressor section 52, the first turbine section 54, and the second turbine section 106. The outer housing 130 may have a substantially uniform diameter extending over the axial length of the air cycle machine 50. Further, the diameter of the outer housing 130 is greater than the diameter of each of the compressor housing 58, the first turbine housing 80, and the second turbine housing 108 such that a clearance is defined between the outer housing 130 and each internal section housing, respectively. Further, at least a portion of the outer housing 130 and a portion of one or more of the compressor housing 58, the first turbine housing 80, and/or the second turbine housing 108 may be integrally formed as a single component, such as via an additive manufacturing process for example.

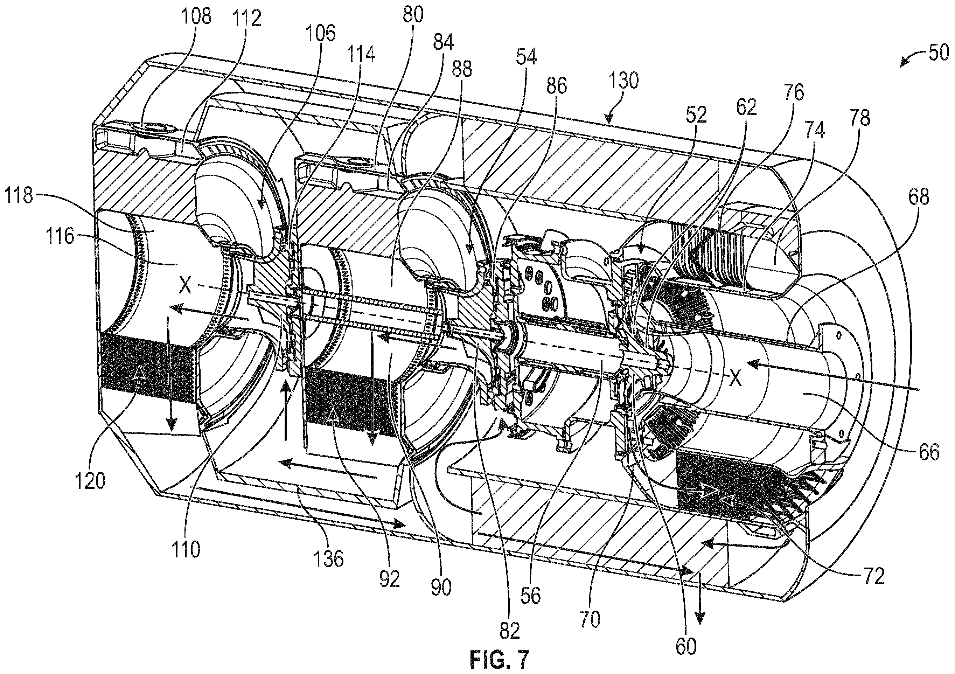

With continued reference to FIGS. 6 and 7, in the illustrated, non-limiting embodiment, a heat exchanger 132 is arranged within the clearance 133 formed between the compressor housing 58 and the outer housing 130. As shown, the heat exchanger 132 may have an annular configuration. In an embodiment, the heat exchanger 132 may be configured as the air-air regeneration heat exchanger 36 as described in the ECS 20 of FIG. 1. The outer housing 130 may include an internal channel 134 axially aligned with the exterior surface of the compressor housing 58, and positioned in overlapping arrangement with a portion of the first turbine section 54. The channel 134 and the compressor housing 58 may be integrally formed. In such embodiments, the regeneration heat exchanger 132 may be supported partially by the exterior of the compressor housing 58 and partially by the channel 134.

In embodiments where the air cycle machine 50 includes a compressor section 52 and the turbine section 54, at least a portion, and in some embodiments, the entire the fluid flow path extending between the compressor outlet 70 and the turbine inlet 86 is arranged within the interior of the outer housing 130. In embodiments where the air cycle machine 50 additionally includes a compressor section 52, alternatively or in addition to the fluid flow path between the compressor outlet 70 and the turbine inlet 86, at least a portion, and in some embodiments, the entirety of the fluid flow path extending between the turbine outlet 88 and the second turbine inlet 114 is arranged within the interior of the outer housing 130. The interior surface of the outer housing 130 and/or at least one wall protruding inwardly from the outer housing 130, alone or in combination with the housing of a respective section, may define the flow path.

For example, the clearance 133 and/or the heat exchanger 132 arranged within the clearance 133 formed between the compressor housing 58 and the outer housing 130 forms part of the fluid flow extending between the compressor outlet 70 and/or the heat exchanger 72 and the first turbine inlet 86. Accordingly, the flow output from the compressor outlet 70 and provided to the first turbine inlet 86 remains within the interior of the outer housing 130. Alternatively, or in addition, an internal duct 136 forming a portion of the fluid flow path may extend between the outlet of heat exchanger 92 associated with the first turbine section 54 and the second turbine inlet 114 of the second turbine section 106. Such ducting 136 defines an annular passage that directs the flow of the expanded medium A" output from the heat exchanger 92 directly to the second turbine inlet 114, without requiring the flow to leave the interior of the outer housing 130. In an embodiment, the duct 136 may also be used to collect water that has condensed within the expanded medium A" at the outlet of the heat exchanger 92.

In operation, a flow of medium A is provided to the duct 68 defining the compressor inlet 66. From the compressor inlet 66, the medium A is compressed by the rotating compressor rotor 60, causing the temperature and pressure of the medium A to increase before being output from the compressor outlet 70. The compressed medium A' output from the compressor outlet 70 flows within the interior of the compressor housing 58 through the hot liquid heat exchanger 72. After being cooled by a liquid L within the hot liquid heat exchanger 72, the compressed medium A' is directed to the clearance 133 arranged between the exterior surface of the compressor housing and the outer housing 130. Within this clearance, the compressed medium A' passes through the regeneration heat exchanger 132, in which the compressed medium A' is further cooled by another airflow.

At an outlet end of the regeneration heat exchanger 132, the compressed medium A' is directed to the first turbine inlet 86 of the first turbine section 54. From the first turbine inlet 86, the compressed medium A' passes over and rotates the first turbine rotor 82, thereby extracting work from the compressed medium A'. The expanded medium A" output from the first turbine outlet 88 is configured to flow, for example radially, from the outlet duct 90 through the second heat exchanger 92. Within the second heat exchanger 92, heat is transferred to the expanded medium A" from a cooling liquid L.

At the outlet of the second heat exchanger 92, the flow of expanded medium A" is diverted towards the second turbine inlet 114 of the second turbine section 106 by the duct 136. As the expanded medium A" contacts the duct, some of the condensation within the expanded medium A" may gather on the surface of the duct 136. From the second turbine inlet 114, the expanded medium A" passes over and rotates the second turbine rotor 110, thereby extracting additional work from the expanded medium A". The expanded medium A" output from the second turbine outlet 116 is configured to flow, for example radially, from the outlet duct 118 through the third heat exchanger 120. Within the third heat exchanger 120, heat is transferred to the expanded medium A" from a cooling liquid L. At the outlet of the third heat exchanger, the heated expanded medium A" may be configured to pass through the regeneration heat exchanger 132 such that the compressed medium output from the compressor section 52 forms the first pass through the regeneration heat exchanger 132 and the expanded medium A;' output from the third heat exchanger 120 forms the second pass through the regeneration heat exchanger 132. In such embodiments, an outlet may be formed in the outer housing 130 in fluid communication with the second pass through the regeneration heat exchanger 132.

An air cycle machine 50 or compressing device having one or more having at least one heat exchanger integrated therein, as illustrated and described, not only results in a simpler assembly, but also reduces the overall space, and weight of the ECS 20. Further, by integrating the ducting between the various sections of the air cycle machine 50 into the air cycle machine 50, not only is the overall quantity of external ducting of the ECS is reduced, but also the pressure losses that typically occur as the flow passes through such ducting will be minimized.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An air cycle machine comprising:
an outer housing (130);
a first section (52) arranged within the outer housing (130), the first section (52) including a first housing and a first rotatable component; and
a second section (54) arranged within the outer housing (130) and operably coupled to the first section (52), the second section (54) including a second housing and a second rotatable component;
wherein at least a portion of a fluid flow path extending between an outlet of the first rotatable component and an inlet of the second rotatable component is arranged within the outer housing (130).

2. The air cycle machine of claim 1, wherein an entirety of the fluid flow path extending between the outlet of the first rotatable component and the inlet of the second rotatable component is arranged within the outer housing (130).

3. The air cycle machine of any preceding claim, wherein the first section (52) is a compressor section and the second section (54) is a turbine section.

4. The air cycle machine of any preceding claim, wherein the first section (52) is a first turbine section and the second section (54) is a second turbine section.

5. The air cycle machine of any preceding claim, wherein the outer housing (130) further comprises at least one wall extending inwardly, the at least one wall cooperating with at least one of the first section (52) and the second section (54) to define the portion of the fluid flow path extending between the outlet of the first rotatable component and the inlet of the second rotatable component.

6. The air cycle machine of any preceding claim, further comprising at least one heat exchanger arranged along the at least the portion of the fluid flow path extending between the outlet of the first rotatable component and the inlet of the second rotatable component.

7. The air cycle machine of claim 6, wherein the at least one heat exchanger is positioned within one of the first housing and the second housing.

8. The air cycle machine of claim 7, wherein the at least one heat exchanger is mounted downstream from one of the first rotatable component and the second rotatable component relative to a flow through the first section (52) or the second section (54).

9. The air cycle machine of claim 6, wherein the at least one heat exchanger is an air-liquid heat exchanger.

10. The air cycle machine of any preceding claim, wherein the outer housing (130) and at least the portion of the first section (52) and the second section (54) are integrally formed.

11. The air cycle machine of any preceding claim, further comprising a third section arranged within the outer housing (130) and operably coupled to the first section (52) and the second section (54), the third section including a third housing and a third rotatable component.

12. The air cycle machine of claim 11, wherein the first section (52) is a compressor section, the second section (54) is a first turbine section, and the third section is second turbine section.

13. The air cycle machine of claim 12, wherein the compressor section, the first turbine section, and the second turbine section are operably coupled by a shaft, the compressor section, the first turbine section, and the second turbine section being arranged in series along an axis of the shaft.

14. The air cycle machine of any preceding claim, wherein a diameter of the outer housing (130) is uniform over a length of the air cycle machine.
